# EUROPÄISCHE PATENTSCHRIFT

(11) **EP 1 167 929 B1**
(45) Veröffentlichungstag und Bekanntmachung des Hinweises auf die Patenterteilung: **14.10.2009**
(21) Anmeldenummer: 01114793.1
(22) Anmeldetag: 27.06.2001
(51) Int. Cl.: G01F 1/688, B67D 5/04, G01N 25/46

(54) **Verfahren zum Bestimmen des Durchflusses eines Gasgemisches**
Method for the determination of the flow rate of a gas mixture
Procédé pour la détermination du débit d' un mélange gazeux

(30) Priorität: 30.06.2000 DE 10031813
(43) Veröffentlichungstag der Anmeldung: 02.01.2002
(73) Patentinhaber: FAFNIR GmbH, D-22765 Hamburg (DE)
(72) Erfinder: Schrittenlacher, Wolfgang, Dr. rer. nat., 21075 Hamburg (DE); Kunter, Stefan, Dipl. Ing., 22089 Hamburg (DE)
(74) Vertreter: UEXKÜLL & STOLBERG

(56) Entgegenhaltungen:
- EP-A- 0 373 965
- DE-A- 3 718 827
- US-A- 5 417 256

## Beschreibung

Die Erfindung betrifft ein Verfahren zum Bestimmen des Durchflusses eines Gasgemisches sowie Anwendungen dieses Verfahrens, insbesondere auf einer Tankstelle.

Beim Betanken eines Kraftfahrzeugs auf einer Tankstelle wird mit Hilfe eines Zapfventils von einer Tanksäule aus Kraftstoff in den Tank des Kraftfahrzeugs eingefüllt. Gleichzeitig wird das Gasgemisch, das sich über dem Flüssigkeitsspiegel des Kraftstoffs im Tank des Kraftfahrzeugs befindet und aus einem Kraftstoffdampf/Luft-Gemisch besteht, über eine separate Leitung abgesaugt und in den Vorratstank der Tankstelle geführt. Die dafür verwendete Gaspumpe sollte so gesteuert werden, dass das pro Zeiteinheit abgesaugte Volumen des Kraftstoffdampf/Luft-Gemisches gleich dem pro Zeiteinheit in den Tank des Kraftfahrzeugs eingefüllten Volumen des Kraftstoffs ist.

Aus der WO 98/31628 ist ein Verfahren zum Steuern der Gaspumpe in Abhängigkeit von der Förderrate der zum Zuführen des Kraftstoffs verwendeten Kraftstoffpumpe bekannt. Dabei wird der Durchfluss des abgesaugten Kraftstoffdampf/Luft-Gemisches mit Hilfe einer sogenannten Fleischröhre als Sensor gemessen, um die Förderrate der Gaspumpe volumetrisch an die der Kraftstoffpumpe anzupassen. Ein grundsätzliches Problem bei Sensoren zum Messen des Durchflusses eines Gases liegt darin, dass das von dem Sensor abgegebene Messsignal von der Zusammensetzung des Gases abhängen kann, diese Zusammensetzung aber häufig nicht genau bekannt ist, so dass sich das Messsignal nicht entsprechend korrigieren lässt.

Es ist Aufgabe der Erfindung, ein Verfahren zum Bestimmen des Durchflusses eines Gasgemisches zu schaffen, das sich kostengünstig und zuverlässig unter Anwendung eines relativ einfach konzipierten Strömungssensors ausführen lässt, auch wenn die Zusammensetzung des Gasgemisches nicht bekannt ist oder fluktuiert.

Diese Aufgabe wird gelöst durch ein Verfahren zum Bestimmen des Durchflusses eines Gasgemisches mit den Merkmalen des Anspruchs 1. Der Anspruch 6 betrifft eine Vorrichtung zum Durchführen des Verfahrens und der Anspruch 8 eine Anwendung des Verfahrens, insbesondere auf einer Tankstelle. Vorteilhafte Ausgestaltungen der Erfindung ergeben sich aus den Unteransprüchen.

Bei dem erfindungsgemäßen Verfahren zum Bestimmen des Durchflusses eines Gasgemisches strömt das Gasgemisch an einem Strömungssensor vorbei. Der Strömungssensor weist eine Heizeinrichtung und einen auf die Temperatur der Heizeinrichtung reagierenden ersten Temperaturfühler auf. Mit einem zweiten Temperaturfühler wird eine Temperatur gemessen, die für die Temperatur einer Flüssigkeit charakteristisch ist, über der das Gasgemisch als Dampf steht. Mittels der bekannten Dampfdruckkurve der Flüssigkeit und der Temperatur der Flüssigkeit wird ein die Zusammensetzung des Gasgemisches sowie dessen Wärmeabführvermögen charakterisierendes erstes Messsignal erzeugt. Ein den Durchfluss des Gasgemisches charakterisierendes zweites Messsignal wird mittels der der Heizeinrichtung zugeführten Heizleistung, der Temperatur des ersten Temperaturfühlers und des ersten Mess-signals erzeugt.

Der bei dem Verfahren benutzte Strömungssensor ist ein herkömmlicher thermischer Strömungssensor. Zum Bestimmen des Durchflusses wird der Kühleffekt ausgenutzt, den das auf den Strömungssensor einströmende Gasgemisch bewirkt. Je größer die Strömungsgeschwindigkeit und damit der Durchfluss des Gasgemisches ist, um so größer ist die pro Zeiteinheit durch Wärmeübertragung und Konvektion über das Gasgemisch von dem Strömungssensor weggeführte Wärmemenge. Wenn also z.B. der Heizeinrichtung eine konstante Heizleistung zugeführt wird, ist die von dem ersten Temperaturfühler erfasste Temperatur bei hohem Durchfluss geringer als bei niedrigem Durchfluss. Wenn dagegen, wie es bei einer bevorzugten Ausführungsform der Fall ist, die Heizleistung der Heizeinrichtung so geregelt wird, dass die Temperatur des ersten Temperaturfühlers um einen vorgegebenen Wert oberhalb der Umgebungstemperatur liegt (also im Wesentlichen konstant ist), ist entsprechend bei einem größeren Durchfluss eine höhere Heizleistung erforderlich als bei einem kleineren Durchfluss.

Allerdings hängt der erwähnte Kühleffekt bzw. das Wärmeabführvermögen des Gasgemisches von der Zusammensetzung des Gasgemisches ab. Wenn die Dampfdruckkurve der Flüssigkeit, über der das Gasgemisch als Dampf steht, bekannt ist, lässt sich mittels der mit Hilfe des zweiten Temperaturfühlers gemessenen Temperatur der Dampfdruck der Flüssigkeit abschätzen, der wiederum für die Zusammensetzung des Gasgemisches und somit dessen Wärmeabführvermögen charakteristisch ist.

Das Verfahren wird angewendet, wenn das Gasgemisch ein Kraftstoffdampf/Luft-Gemisch ist, das sich über einem flüssigen Kraftstoff ausbildet. Je höher die Temperatur ist, um so größer ist der Partialdruck und somit der Anteil des Kraftstoffs in dem Kraftstoffdampf/Luft-Gemisch.

Das erste Messsignal und das zweite Messsignal werden vorzugsweise mit Hilfe einer Steuer- und Auswerteeinrichtung erzeugt, die einen Mikroprozessor aufweisen kann. Die Steuer- und Auswerteeinrichtung ermöglicht einen vorzugsweise vollautomatischen Ablauf des Verfahrens. In einer bevorzugten Ausführungsform wird der Durchfluss des Gasgemisches aus dem zweiten Messsignal und bei Kalibrierungsmessungen bestimmten Parametern bestimmt. Mit Hilfe solcher Kalibrierungsmessungen unter Verwendung vorgegebener Flüssigkeiten bei vorgegebenen Bedingungen lassen sich die in die Auswertung der Messergebnisse eingehenden Parameter ermitteln, so dass es prinzipiell möglich ist, aus der Steuer- und Auswerteeinrichtung direkt den Durchflusswert des strömenden Gasgemisches auszugeben, z.B. auf eine Anzeige oder in einen Speicher. Häufig genügt jedoch bereits ein relatives Maß für den Durchfluss, z.B. wenn das Verfahren für Steuerungs- oder Regelungszwecke angewendet wird.

Wegen der thermischen Trägheit der Komponenten des Strömungssensors sowie des zweiten Temperaturfühlers kann es einige Zeit dauern, z.B. einige Sekunden, bis das zweite Messsignal den Durchfluss des Gasgemisches zuverlässig charakterisiert. Wenn das Verfahren in einer Regelung benutzt wird, ist dieses Verhalten nachteilig, insbesondere wenn der zu regelnde Prozess selbst nur eine relativ kurze Dauer hat. Mit einer vorteilhaften Ausgestaltung des erfindungsgemäßen Verfahrens lässt sich dagegen eine viel kürzere Reaktionszeit erreichen. Dazu wird nach dem Einschalten der Strömung des Gasgemisches aus dem zeitlichen Verlauf des zweiten Messsignals ein Vorhersagewert für das zweite Messsignal und/oder den Durchfluss des Gasgemisches bestimmt, der einen stationären Zustand charakterisiert. Der Vorhersagewert kann z.B. aus der ersten zeitlichen Ableitung des zweiten Messsignals und/oder des Durchflusses des Gasgemisches bestimmt werden. Die dazu erforderlichen Auswerteschritte, in die auch die Ergebnisse von Kalibrierungsmessungen eingehen können, lassen sich z.B. mit der oben erwähnten Steuer- und Auswerteeinrichtung durchführen.

Vorzugsweise weist die Heizeinrichtung des Strömungssensors einen PTC-Widerstand als Heizwiderstand auf. Unter einem PTC-Widerstand versteht man üblicherweise ein Widerstandsbauteil (in der Regel aus ferroelektrischer Keramik, insbesondere dotiertem Bariumtitanat), bei dem der elektrische Widerstand ab einer bestimmten Temperatur mit der Temperatur steil ansteigt. Ein derartiger Heizwiderstand ist besonders geeignet, wenn das Gasgemisch ein explosionsfähiges Gas ist, wie es bei einem Kraftstoffdampf/Luft-Gemisch meist der Fall ist. Wegen seiner Kennlinie kann ein PTC-Widerstand nämlich in seinem Arbeitsbereich bei einer relativ hohen Temperatur betrieben werden, die jedoch unterhalb der Zündtemperatur des Gasgemisches liegen muss. Wenn nun durch einen Fehler bei der Steuerung oder Regelung der dem Heizwiderstand zugeführten Heizleistung die Temperatur des Heizwiderstandes ansteigen würde, würde der resultierende Widerstandswert steil ansteigen. Infolge der von der Spannungsversorgung vorgegebenen oberen Spannungsgrenze führt dies zu einem Absinken des Heizstroms, so dass die Höchsttemperatur eines PTC-Heizwiderstands begrenzt ist und bei geeigneter Dimensionierung und Wahl des Arbeitsbereiches sicher unterhalb der Zündtemperatur des Gasgemisches liegt. Das System ist also in sich ohne zusätzliche Sicherheitseinrichtung stabil und damit sehr zuverlässig und sicher.

Eine bevorzugte Anwendung des erfindungsgemäßen Verfahrens erfolgt in einem Verfahren zum Überwachen der Gasrückführung in einem Betankungssystem. Dabei ist das Betankungssystem dazu eingerichtet, einen flüssigen Kraftstoff mittels einer Kraftstoffpumpe aus einem Vorratstank in einen zu befüllenden Tank zu fördern und das über dem Kraftstoff in dem zu befüllenden Tank stehende Gasgemisch mittels einer Gaspumpe in den Vorratstank zu führen. Der Durchfluss des Gasgemisches auf dem Weg in den Vorratstank wird gemäß dem erfindungsgemäßen Verfahren bestimmt. Beispielsweise ist das Betankungssystem einer Tankstelle zugeordnet, und die bekannte Dampfdruckkurve ist je nach Jahreszeit die Dampfdruckkurve von Sommerkraftstoff oder Winterkraftstoff. In diesem Beispiel ist der zu befüllende Tank der Tank eines Kraftfahrzeugs.

Wenn der Durchfluss eines Kraftstoffdampf/Luft-Gemisches sowie dessen Zusammensetzung bekannt ist, lässt sich ermitteln, welche Menge an Kohlenwasserstoffen in den Vorratstank zurückgeführt wird, was für den Betreiber des Betankungssystems von Interesse ist. Darüber hinaus kann der nach dem erfindungsgemäßen Verfahren bestimmte Durchfluss des Gasgemisches in vorteilhafter Weise für eine Regelung der Gaspumpe benutzt werden (siehe unten).

Der zweite Temperaturfühler sollte in der Nähe des zu befüllenden Tanks angeordnet sein, damit er die Temperatur des Kraftstoffs möglichst genau erfasst. Dabei ist es jedoch akzeptabel, wenn er sich außerhalb des Tanks befindet. Dies vereinfacht den Aufbau des Betankungssystems, insbesondere wenn die zu befüllenden Tanks unterschiedlich konstruiert sind.

Eine übliche Steuerung der Gaspumpe in Abhängigkeit des von einem Kraftstoff-Durchflussmesser bestimmten Durchflusses des Kraftstoffs führt meist nicht zu dem in der Regel erwünschten Ergebnis, dass die volumetrische Durchflussrate des zu dem Tank geförderten Kraftstoffs gleich der des von der Gaspumpe abgesaugten Gasgemischs ist. Vorzugsweise wird daher die Förderrate der Gaspumpe in Anpassung an die Förderrate der Kraftstoffpumpe über den gemäß dem erfindungsgemäßen Verfahren bestimmten Durchfluss des Gasgemisches geregelt. Die Förderrate der Kraftstoffpumpe dient also als Sollwert, der gemessene Durchfluss des Gasgemisches ist der Istwert, und der Antrieb der Gaspumpe wird entsprechend der Abweichung des Istwerts vom Sollwert nach einem der üblichen Regelverfahren angesteuert.

Wenn die Förderrate der Gaspumpe nicht geregelt wird oder in Ergänzung zu einer Regelung ist es auch denkbar, dass die Steuerung der Gaspumpe in Anpassung an die Förderrate der Kraftstoffpumpe über den gemäß dem erfindungsgemäßen Verfahren bestimmten Durchfluss des Gasgemisches intermittierend nachgestellt wird. Dazu kann die Steuerung der Gaspumpe z.B. nach jedem Betankungsvorgang gemäß dem während dieses Betankungsvorgangs im stationären Zustand bestimmten Durchfluss des Gasgemisches nachgestellt werden. Dieses Verfahren beruht auf der Annahme, dass eine kurzfristige Regelung der Gaspumpe während eines Betankungsvorganges nicht erforderlich ist, dass sich aber die Eigenschaften der Gaspumpe im Laufe der Zeit ändern. Dem wird Rechnung getragen, indem die Steuerung der Gaspumpe gemäß der letzten Durchflussmessung nachgestellt wird, z.B. indem die Steuerung nach jedem Betankungsvorgang (oder allgemeiner, in regelmäßigen Abständen) über eine Schnittstelle mit neuen Referenzdaten, etwa für den Antriebsstrom der Gaspumpe in Abhängigkeit von der Förderrate der Kraftstoffpumpe oder dem Antriebsstrom der Kraftstoffpumpe, versorgt wird. Wenn die Gaspumpe nicht direkt geregelt wird, spielt der oben erwähnte Nachteil, dass das Verfahren zum Bestimmen des Durchflusses wegen der thermischen Trägheit von Komponenten eine Zeitkonstante von einigen Sekunden haben kann, keine Rolle.

Es ist möglich, mit dem Gasgemisch in Richtung auf den Vorratstank geführte Flüssigkeit an dem Strömungssensor als zusätzlich induzierte Kühlleistung zu erfassen. Diese Flüssigkeit kann Kondensat oder aus dem zu befüllenden Tank stammender Kraftstoff sein, was auf eine Fehlfunktion des Betankungssystems schließen lässt.

Bei einer bevorzugten Ausgestaltung des Verfahrens wird bei einem Wert für den Durchfluss des Gasgemisches, der von einem durch die Förderrate der Kraftstoffpumpe vorgegebenen Sollwert um mehr als eine vorgegebene Fehlergröße abweicht, ein Fehlersignal ausgegeben. Größere Abweichungen lassen auf Betriebsstörungen schließen. Ferner können auf diese Weise beispielsweise Anschlussfehler bei der Montage oder Konfiguration des Betankungssystems erkannt werden. Wenn z.B. die Förderrate der Kraftstoffpumpe durch eine falsche Impulswertigkeit (Impulsfrequenz) kodiert wird, weicht selbst bei volumetrisch übereinstimmenden Förderraten von Kraftstoffpumpe und Gaspumpe der von der fehlerhaft kodierten Förderrate der Kraftstoffpumpe vorgegebene fehlerhafte Sollwert stark von dem in der Messung des Durchflusses des Gasgemisches bestimmten Istwert ab.

Im Folgenden wird die Erfindung anhand von Ausführungsbeispielen näher erläutert. Die Zeichnungen zeigen in
- Figur 1: einen Längsschnitt durch einen Strömungssensor, der zum Durchführen des erfindungsgemäßen Verfahrens verwendet wird,
- Figur 2: die Dampfdruckkurven von Sommerkraftstoff und Winterkraftstoff, und zwar aufgetragen als Dampfdruck als Funktion der Temperatur (oberer Teil) und als Konzentration des Kraftstoffdampfes in einem Kraftstoffdampf/Luft-Gemisch als Funktion der Temperatur (unterer Teil), und
- Figur 3: eine schematische Darstellung einer Zapfsäule auf einer Tankstelle mit den zum Durchführen des erfindungsgemäßen Verfahrens verwendeten Komponenten.

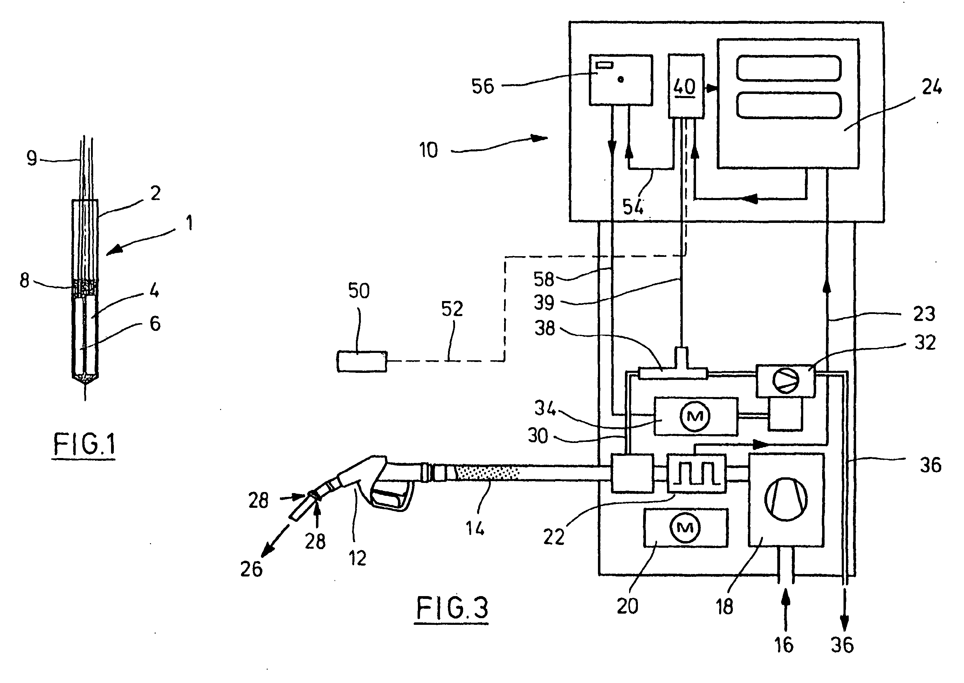

In Figur 1 ist eine Ausführungsform eines Strömungssensors 1, der beim Bestimmen des Durchflusses eines Gasgemisches angewendet werden kann, im Längsschnitt dargestellt. Der Strömungssensor 1 weist eine Kapsel 2 auf, die eine Heizeinrichtung 4 und einen Temperaturfühler 6 umgibt. Über eine Vergussmasse 8 stehen die Kapsel 2, die Heizeinrichtung 4 und der Temperaturfühler 6 in thermischem Kontakt. Von der Heizeinrichtung 4 und dem Temperaturfühler 6 gehen Zuleitungen 9 aus.

Im Ausführungsbeispiel dient ein PTC-Widerstand als Heizeinrichtung. Der Temperaturfühler 6 ist als Platin-Messwiderstand (Pt 1000) ausgeführt. Die Kapsel 2 ragt in das Innere eines Rohres, das von dem Gas, dessen Durchfluss bestimmt werden soll, durchströmt wird. Die von dem strömenden Gas pro Zeiteinheit von dem Strömungssensor 1 abgeführte Wärmemenge muss im stationären Zustand von der Heizeinrichtung 4 nachgeliefert werden. Daher ist die Leistung, mit der die Heizeinrichtung 4 betrieben wird, wenn die von dem Temperaturfühler 6 erfasste Temperatur konstant ist (und z.B. um einen vorgegebenen Wert oberhalb der Umgebungstemperatur liegt), ein Maß für den Durchfluss des Gases. Man könnte auch die Leistung der Heizeinrichtung 4 konstant halten und die von dem Temperaturfühler 6 gemessene Temperatur als Maß für den Durchfluss verwenden. Die elektrischen und elektronischen Versorgungs-, Steuer- und Regelelemente für die Heizeinrichtung 4 und den Temperaturfühler 6 befinden sich in einer Steuer- und Regeleinrichtung, die in Figur 1 nicht eingezeichnet ist.

Um aus der Leistung der Heizeinrichtung 4 oder der Temperatur des Temperaturfühlers 6 auf den Durchfluss eines Gases zu schließen, muss der Strömungssensor 1 kalibriert werden. Wenn das Gas ein Gasgemisch ist, das keine konstante Zusammensetzung hat, ist es zusätzlich erforderlich, Information über die Zusammensetzung des Gasgemisches und somit dessen Wärmeabführvermögen zu gewinnen. Wenn die Zusammensetzung oder ein dafür charakteristischer Parameter einmal bekannt ist, kann für die Auswertung einer Messung mit dem Strömungssensor 1 ein Kalibrierungsdatensatz herangezogen werden, der mit einem Gasgemisch der betreffenden Zusammensetzung ermittelt wurde.

Im Folgenden wird anhand eines Beispiels erläutert, wie bei dem Verfahren zum Bestimmen des Durchflusses eines Gasgemisches aus der Dampfdruckkurve einer Flüssigkeit, über der das Gasgemisch als Dampf steht, auf die Zusammensetzung des Gasgemisches geschlossen werden kann.

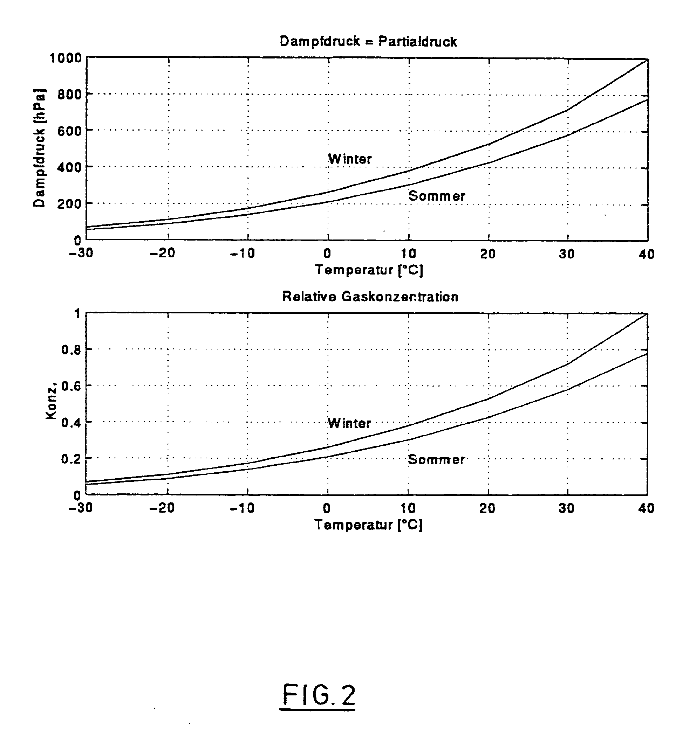

Im Beispiel ist das Gasgemisch ein Kraftstoffdampf/Luft-Gemisch, das sich im Gleichgewicht über dem flüssigen Kraftstoff ausgebildet hat. Diese Situation liegt in einem belüfteten Tank vor, z.B. dem Tank eines Kraftfahrzeugs. Figur 2 zeigt im oberen Teil die Dampfdruckkurven für Sommerkraftstoff und Winterkraftstoff, wie er im Sommer bzw. Winter an Tankstellen abgegeben wird. Der Partialdruck des Kraftstoffdampfes ist als "Dampfdruck" bezeichnet. Der Partialdruck der Luft macht die Differenz zu dem äußeren Luftdruck aus. Man sieht, wie mit steigender Temperatur der Partialdruck des Kraftstoffdampfes ansteigt. Kennt man die Temperatur, kennt man bei bekannter Dampfdruckkurve auch den Partialdruck des jeweiligen Kraftstoffes und damit die Zusammensetzung des Gasgemisches.

Im unteren Teil der Figur 2 ist der Partialdruck des Kraftstoffdampfes in seine Konzentration umgerechnet, so dass man aus den Kurven direkt die Konzentration des Kraftstoffdampfes in dem Kraftstoffdampf/Luft-Gemisch als Funktion der Temperatur ablesen kann.

Um im Ausführungsbeispiel den Durchfluss des Kraftstoffdampf/Luft-Gemisches zu bestimmen, wird also mittels der bekannten Dampfdruckkurve für Sommerkraftstoff bzw. Winterkraftstoff und der Temperatur des Kraftstoffes, die über einen separaten Temperaturfühler gemessen wird, die Konzentration des Kraftstoffdampfes ermittelt (erstes Messsignal) und in einer Steuer- und Auswerteeinrichtung dazu benutzt, einen dieser Konzentration entsprechenden Kalibrierungsdatensatz für den Strömungssensor 1 auszuwählen. Daraus und aus der Temperatur des Temperaturfühlers 6 sowie der der Heizeinrichtung 4 zugeführten Heizleistung lässt sich dann in der Steuer- und Auswerteeinrichtung der Durchfluss des Kraftstoffdampf/Luft-Gemisches bzw. ein diesen Durchfluss charakterisierendes zweites Messsignal bestimmen. Das zweite Messsignal kann dann als Durchflusswert (in üblichen Einheiten) angezeigt oder gespeichert oder direkt für andere Zwecke (wie die im folgenden beschriebene Regelung) weiter verwendet werden.

Figur 3 zeigt in schematischer Weise in einem Ausführungsbeispiel, wie das Verfahren zum Bestimmen des Durchflusses eines Gasgemisches in einem Verfahren zum Überwachen der Gasrückführung in einem Betankungssystem auf einer Tankstelle angewandt werden kann.

Mit einer Zapfsäule 10 steht ein Zapfventil 12 über einen Schlauch 14 in Verbindung. Über eine Kraftstoffzuleitung 16, die zu einem als Erdtank gestalteten Vorratstank führt, kann mit Hilfe einer Kraftstoffpumpe 18, die von einem Motor 20 angetrieben wird, Kraftstoff durch den Schlauch 14 zu dem Zapfventil 12 gefördert werden. Dabei strömt der Kraftstoff durch einen Kolbenmesser 22 mit einem integrierten Impulsgeber, der entsprechend dem Durchfluss des flüssigen Kraftstoffs über eine Leitung 23 Impulse an einen Rechner 24 liefert. Daraus kann der Rechner 24 den Durchfluss des in Richtung des Pfeiles 26 zu einem zu befüllenden Tank eines Kraftfahrzeuges ausgegebenen Kraftstoff und somit die Förderrate der Kraftstoffpumpe 18 bestimmen.

Über das Zapfventil 12, das in den Tankstutzen des Kraftfahrzeugs eingehängt ist, wird in Richtung der Pfeile 28 das über dem flüssigen Kraftstoff in dem Tank des Kraftfahrzeugs im Wesentlichen im Gleichgewicht mit der umgebenden Luft stehende Kraftstoffdampf/Luft-Gemisch abgesaugt. Dazu dienen eine Gasrückführungsleitung 30, die in dem Schlauch 14 geführt ist und innerhalb der Zapfsäule 10 davon abzweigt, und eine Gaspumpe 32, die von einem Motor 34 angetrieben wird. Durch den mit 36 bezeichneten Abschnitt der Gasrückführungsleitung wird das Gasgemisch dem Erdtank zugeführt.

Um den Durchfluss des Gasgemisches zu bestimmen, durchströmt das Gasgemisch einen Gasdurchflussmesser 38. Im Ausführungsbeispiel ist der Gasdurchflussmesser 38 im Wesentlichen ein Rohrstück, in das ein Strömungssensor 1 der anhand von Figur 1 erläuterten Bauart hineinragt. Über eine Leitung 39 ist der Gasdurchflussmesser 38 mit einer Steuer- und Auswerteeinrichtung 40 verbunden. Die Steuer- und Auswerteeinrichtung 40 enthält die elektrischen und elektronischen Bauteile zum Betreiben der Heizeinrichtung 4 und des Temperaturfühlers 6 und kommuniziert mit dem Rechner 24. Dabei können alle zum Bestimmen des Durchflusses des Gasgemisches und zur Steuerung und Regelung des Betriebs der Zapfsäule 10 erforderlichen Schritte in dem Rechner 24 ausgeführt werden, oder ein Teil kann von der Steuer- und Auswerteeinrichtung 40 übernommen werden.

Beim Betanken des Kraftfahrzeugs ist es erwünscht, dass für das pro Zeiteinheit zugeführte Kraftstoffvolumen ein gleiches Volumen an Kraftstoffdampf/Luft-Gemisch aus dem Tank abgesaugt wird. Um dies zu gewährleisten, wird mit Hilfe des zuvor erläuterten Verfahrens zum Bestimmen des Durchflusses eines Gasgemisches der Motor 34 der Gaspumpe 32 geregelt. Die Temperatur des Kraftstoffes in dem Tank wird mit einem Temperaturfühler 50 ermittelt, der über eine Leitung 52 (und gegebenenfalls zusätzliche elektronische Komponenten) mit der Steuer- und Auswerteeinrichtung 40 verbunden ist. In Figur 3 ist der Temperaturfühler 50 schematisch eingezeichnet. Er befindet sich in der Nähe des Tanks des Kraftfahrzeugs, z.B. an dem Zapfventil 12. Selbst wenn die von dem Temperaturfühler 50 angezeigte Temperatur nicht genau mit der Temperatur des Kraftstoffs im Tank des Kraftfahrzeugs (im thermischen Gleichgewicht mit dem über dem Kraftstoff stehenden Kraftstoffdampf/Luft-Gemisch) übereinstimmt, lässt sich, gegebenenfalls mit Hilfe empirischer Korrekturen, der Durchfluss des Kraftstoffdampf/Luft-Gemisches mit einer für die Regelung der Gaspumpe 32 ausreichenden Genauigkeit ermitteln.

Der Rechner 24 nimmt die Impulse des Kolbenmessers 22 auf, die der gemessenen Förderrate der Kraftstoffpumpe 18 entsprechen, und gibt sie an die Steuer- und Auswerteeinrichtung 40 weiter. Wenn ein Mikrocontroller darin, wie bereits erläutert, den Durchfluss des Gasgemisches bestimmt und mit der den Sollwert vorgebenden Förderrate der Kraftstoffpumpe 18 verglichen hat, gibt die Steuer- und Auswerteeinrichtung 40 gemäß dem Vergleichsergebnis zur Regelung der Gaspumpe 32 ein Steuersignal 54 an einen Frequenzumrichter 56 aus, der über ein Motoranschlusskabel 58 den Motor 34 der Gaspumpe 32 mit der der Regelung entsprechenden Drehzahl antreibt.

Weitere Ausgestaltungen des Verfahrens (etwa zur Abschätzung des Durchflusses des Gasgemisches im stationären Zustand des Gasdurchflussmessers, bevor dieser erreicht ist, oder zum Ausgeben eines Fehlersignals) wurden weiter oben bereits erläutert. Die dafür erforderliche Messwert- und Datenverarbeitung kann in dem Rechner 24 und/oder der Steuer- und Auswerteeinrichtung 40 durchgeführt werden.

## Patentansprüche

1. Verfahren zum Bestimmen des Durchflusses eines Gasgemisches,
- bei dem das Gasgemisch an einem Strömungssensor (1) vorbeiströmt, der eine Heizeinrichtung (4) und einen auf die Temperatur der Heizeinrichtung (4) reagierenden ersten Temperaturfühler (6) aufweist,
- bei dem mit einem zweiten Temperaturfühler (50) eine Temperatur gemessen wird, die für die Temperatur einer Kraftstoffflüssigkeit charakteristisch ist, über der das Gasgemisch als Kraftstoffdampf/Luft-Gemisch steht,
- bei dem mittels der bekannten Dampfdruckkurve der Flüssigkeit und der Temperatur der Flüssigkeit ein die Zusammensetzung des Gasgemisches und somit dessen Wärmeabführvermögen charakterisierendes erstes Messsignal erzeugt wird und
- bei dem mittels der der Heizeinrichtung (4) zugeführten Heizleistung, der Temperatur des ersten Temperaturfühlers (6) und des ersten Messsignals ein den Durchfluss des Gasgemisches charakterisierendes zweites Messsignal erzeugt wird.

2. Verfahren nach Anspruch 1, **dadurch gekennzeichnet, dass** die Heizleistung der Heizeinrichtung (4) so geregelt wird, dass die Temperatur des ersten Temperaturfühlers (6) um einen vorgegebenen Wert oberhalb der Umgebungstemperatur liegt.

3. Verfahren nach Anspruch 1 oder 2, **dadurch gekennzeichnet, dass** der Durchfluss des Gasgemisches aus dem zweiten Messsignal und bei Kalibrierungsmessungen bestimmten Parametern bestimmt wird.

4. Verfahren nach einem der Ansprüche 1 bis 3, **dadurch gekennzeichnet, dass** nach dem Einschalten der Strömung des Gasgemisches aus dem zeitlichen Verlauf des zweiten Messsignals ein Vorhersagewert für das zweite Messsignal und/oder den Durchfluss des Gasgemisches bestimmt wird, der einen stationären Zustand charakterisiert.

5. Verfahren nach Anspruch 4, **dadurch gekennzeichnet, dass** der Vorhersagewert aus der ersten zeitlichen Ableitung des zweiten Messsignals und/oder des Durchflusses des Gasgemisches bestimmt wird.

6. Vorrichtung zum Durchführen des Verfahrens zum Bestimmen des Durchflusses eines Gasgemisches nach einem der Ansprüche 1 bis 5, **gekennzeichnet durch**
- einen Strömungssensor (1), an dem das Gasgemisch vorbeiströmt und der eine Heizeinrichtung (4) und einen auf die Temperatur der Heizeinrichtung (4) reagierenden ersten Temperaturfühler (6) aufweist,
- einen zweiten Temperaturfühler (50), der zur Messung einer Temperatur eingerichtet ist, die für die Temperatur einer Kraftstoffflüssigkeit charakteristisch ist, über der das Gasgemisch als Kraftstoffdampf/Luft-Gemisch steht,
- eine Einrichtung (40), die zum Erzeugen eines ersten Messsignals mittels der bekannten Dampfdruckkurve der Flüssigkeit und der Temperatur der Flüssigkeit eingerichtet ist, wobei das erste Messsignal die Zusammensetzung des Gasgemisches und somit dessen Wärmeabführvermögen charakterisiert, und
- eine Einrichtung (40), die zum Erzeugen eines zweiten Messsignals mittels der der Heizeinrichtung (4) zugeführten Heizleistung, der Temperatur des ersten Temperaturfühlers (6) und des ersten Messsignals eingerichtet ist, wobei das zweite Messsignal den Durchfluss des Gasgemisches charakterisiert.

7. Vorrichtung nach Anspruch 6, **dadurch gekennzeichnet, daß** die Heizeinrichtung (4) einen PTC-Widerstand als Heizwiderstand aufweist.

8. Verwendung des Verfahrens nach einem der Ansprüche 1 bis 5 in einem Verfahren zum Überwachen der Gasrückführung in einem Betankungssystem, wobei das Betankungssystem (10) dazu eingerichtet ist, einen flüssigen Kraftstoff mittels einer Kraftstoffpumpe (18) aus einem Vorratstank in einen zu befüllenden Tank zu fördern und das über dem Kraftstoff in dem zu befüllenden Tank stehende Gasgemisch mittels einer Gaspumpe (32) in den Vorratstank zu führen, **dadurch gekennzeichnet, dass** der Durchfluss des Gasgemisches auf dem Weg in den Vorratstank gemäß dem Verfahren nach einem der Ansprüche 1 bis 5 bestimmt wird.

9. Verfahren nach Anspruch 8, **dadurch gekennzeichnet, dass** der zweite Temperaturfühler (50) in der Nähe des zu befüllenden Tanks, aber außerhalb davon angeordnet ist.

10. Verfahren nach Anspruch 8 oder 9, **dadurch gekennzeichnet, dass** die Förderrate der Gaspumpe (32) in Anpassung an die Förderrate der Kraftstoffpumpe (18) über den gemäß dem Verfahren nach einem der Ansprüche 1 bis 5 bestimmten Durchfluss des Gasgemisches geregelt wird.

11. Verfahren nach einem der Ansprüche 8 bis 10, **dadurch gekennzeichnet, dass** die Steuerung (24, 56) der Gaspumpe (32) in Anpassung an die Förderrate der Kraftstoffpumpe über den gemäß dem Verfahren nach einem der Ansprüche 1 bis 5 bestimmten Durchfluss des Gasgemisches intermittierend nachgestellt wird.

12. Verfahren nach Anspruch 11, **dadurch gekennzeichnet, dass** die Steuerung (24, 56) der Gaspumpe (32) nach jedem Betankungsvorgang gemäß dem während dieses Betankungsvorgangs im stationären Zustand bestimmten Durchfluss des Gasgemisches nachgestellt wird.

13. Verfahren nach einem der Ansprüche 8 bis 12, **dadurch gekennzeichnet, dass** mit dem Gasgemisch in Richtung auf den Vorratstank geführte Flüssigkeit an dem Strömungssensor (1) als zusätzlich induzierte Kühlleistung erfasst wird.

14. Verfahren nach einem der Ansprüche 8 bis 13, **dadurch gekennzeichnet, dass** bei einem Wert für den Durchfluss des Gasgemisches, der von einem durch die Förderrate der Kraftstoffpumpe (18) vorgegebenen Sollwert um mehr als eine vorgegebene Fehlergröße abweicht, ein Fehlersignal ausgegeben wird.

15. Verfahren nach einem der Ansprüche 8 bis 14, **dadurch gekennzeichnet, dass** das Betankungssystem einer Tankstelle (10) zugeordnet ist und die bekannte Dampfdruckkurve je nach Jahreszeit die Dampfdruckkurve von Sommerkraftstoff oder Winterkraftstoff ist.

## Claims

1. Method of determining the throughflow of a gas mixture,
- in which the gas mixture flows past a flow sensor (1) which has a heating device (4) and a first temperature probe (6) reacting to the temperature of the heating device (4),
- in which a temperature, which is characteristic of the temperature of a fuel liquid above which the gas mixture stands as a fuel vapour/air mixture, is measured with a second temperature probe (50),
- in which a first measurement signal characterizing the composition of the gas mixture and thus its heat dissipation capacity is produced by means of the known vapour-pressure curve of the liquid and the temperature of the liquid and
- in which a second measurement signal characterizing the throughflow of the gas mixture is produced by means of the heating power supplied to the heating device (4), the temperature of the first temperature probe (6) and of the first measurement signal.

2. Method according to claim 1, **characterized in that** the heating power of the heating device (4) is controlled such that the temperature of the first temperature probe (6) lies above the ambient temperature by a predetermined value.

3. Method according to claim 1 or 2, **characterized in that** the throughflow of the gas mixture is determined from the second measurement signal and with parameters determined during calibration measurements.

4. Method according to one of claims 1 to 3, **characterized in that** after the insertion of the flow of the gas mixture, a forecast value for the second measurement signal and/or the throughflow of the gas mixture is determined, from the time-related pattern of the second measurement signal, which characterizes a stationary state.

5. Method according to claim 4, **characterized in that** the forecast value is determined from the first time-related derivative of the second measurement signal and/or the throughflow of the gas mixture.

6. Device for carrying out the method of determining the throughflow of a gas mixture according to one of claims 1 to 5, **characterized by**
- a flow sensor (1), at which the gas mixture flows past and which has a heating device (4) and a first temperature probe (6) reacting to the temperature of the heating device (4),
- a second temperature probe (50), which is adapted to measure a temperature characteristic of the temperature of a fuel liquid above which the gas mixture stands as a fuel vapour/air mixture,
- a device (40), which is adapted to produce, by means of the known vapour-pressure curve of the liquid and the temperature of the liquid, a first measurement signal characterizing the composition of the gas mixture and thus its heat dissipation capacity and
- a device (40), which is adapted to produce, by means of the heating power supplied to the heating device (4), of the temperature of the first temperature probe (6) and of the first measurement signal, a second measurement signal characterizing the throughflow of the gas mixture.

7. Device according to claim 6, **characterized in that** the heating device (4) includes a PTC resistor as heating resistor.

8. Use of the method according to one of claims 1 to 5 in a method for monitoring the gas return in a filling system, the filling system (10) being set up to feed a liquid fuel by means of a fuel pump (18) from a storage tank into a tank to be filled and to conduct the gas mixture standing above the fuel in the tank to be filled into the storage tank by means of a gas pump (32), **characterized in that** the throughflow of the gas mixture on the way into the storage tank is measured using the method according to one of claims 1 to 5.

9. Method according to claim 8, **characterized in that** the second temperature probe (50) is arranged near to the tank to be filled, but outside it.

10. Method according to claim 8 or 9, **characterized in that** the delivery rate of the gas pump (32) is controlled to match the delivery rate of the fuel pump (18) via the throughflow of the gas mixture determined by the method according to one of claims 1 to 5.

11. Method according to one of claims 8 to 10, **characterized in that** the control (24, 56) of the gas pump (32) is intermittently adjusted to match the delivery rate of the fuel pump via the throughflow of the gas mixture determined according to one of claims 1 to 5.

12. Method according to claim 11, **characterized in that** the control (24, 56) of the gas pump (32) is adjusted after each filling event according to the throughflow of the gas mixture determined during this filling event in the stationary state.

13. Method according to one of claims 8 to 12, **characterized in that** liquid conducted with the gas mixture guided in the direction of the storage tank is recorded at the flow sensor (1) as additionally induced cooling capacity.

14. Method according to one of claims 8 to 13, **characterized in that** an error signal is emitted in the case of a value for the throughflow of the gas mixture which deviates by more than a pre-specified error value from a target value predetermined by the delivery rate of the fuel pump (18).

15. Method according to one of claims 8 to 14, **characterized in that** the filling system is allocated to a petrol station (10) and that the known vapour-pressure curve is the vapour-pressure curve of summer fuel or winter fuel, depending on the season.

## Revendications

1. Procédé de détermination du débit d'un mélange gazeux,
- selon lequel le mélange gazeux passe sur un capteur d'écoulement (1) qui présente un dispositif de chauffage (4) et une première sonde de température (6) réagissant à la température du dispositif de chauffage (4),
- selon lequel une deuxième sonde de température (50) mesure une température qui est caractéristique de la température d'un liquide carburant, au-dessus duquel le mélange gazeux est présent sous la forme d'un mélange de vapeur de carburant et d'air,
- selon lequel un premier signal de mesure est généré à l'aide de la courbe de pression de vapeur connue du liquide et de la température du liquide, signal qui caractérise la composition du mélange gazeux et donc son pouvoir d'évacuation de la chaleur, et
- selon lequel un deuxième signal de mesure est généré à l'aide de la puissance de chauffage apportée au dispositif de chauffage (4), de la température de la première sonde de température (6) et du premier signal de mesure, le deuxième signal caractérisant le débit du mélange gazeux.

2. Procédé selon la revendication 1, **caractérisé par le fait que** la puissance de chauffage du dispositif de chauffage (4) est réglée de manière à ce que la température de la première sonde de température (6) soit supérieure d'une valeur prédéterminée à la température ambiante.

3. Procédé selon la revendication 1 ou 2, **caractérisé par le fait que** le débit du mélange gazeux est déterminé à partir du deuxième signal de mesure et de paramètres déterminés lors de mesures d'étalonnage.

4. Procédé selon une des revendications 1 à 3, **caractérisé par le fait qu'**après la mise en marche de l'écoulement du mélange gazeux, on détermine, à partir de l'évolution dans le temps du deuxième signal de mesure, une valeur de prédiction pour le deuxième signal de mesure et/ou pour le débit du mélange gazeux, qui caractérise un état stationnaire.

5. Procédé selon la revendication 4, **caractérisé par le fait que** la valeur de prédiction est déterminée à partir de la première dérivation par rapport au temps du deuxième signal de mesure et/ou du débit du mélange gazeux.

6. Dispositif de mise en oeuvre du procédé de détermination du débit d'un mélange gazeux selon une des revendications 1 à 5, **caractérisé par le fait qu'**il comprend
- un capteur d'écoulement (1) sur lequel passe le mélange gazeux et qui présente un dispositif de chauffage (4) et une première sonde de température (6) réagissant à la température du dispositif de chauffage (4),
- une deuxième sonde de température (50) conçue pour mesurer une température qui est caractéristique de la température d'un liquide carburant, au-dessus duquel le mélange gazeux est présent sous la forme d'un mélange de vapeur de carburant et d'air,
- un dispositif (40) qui est conçu pour générer un premier signal de mesure, à l'aide de la courbe de pression de vapeur connue du liquide et de la température du liquide, le premier signal de mesure caractérisant la composition du mélange gazeux et donc le pouvoir d'évacuation de la chaleur de celui-ci, et
- un dispositif (40) qui est conçu pour générer un deuxième signal de mesure, à l'aide de la puissance de chauffage apportée au dispositif de chauffage (4), de la température de la première sonde de température (6) et du premier signal de mesure, le deuxième signal de mesure caractérisant le débit du mélange gazeux.

7. Dispositif selon la revendication 6, **caractérisé par le fait que** le dispositif de chauffage (4) présente une résistance PTC en tant que résistance de chauffage.

8. Utilisation du procédé selon une des revendications 1 à 5, dans le cadre d'un procédé de surveillance du retour de gaz dans un système de ravitaillement, le système de ravitaillement (10) étant agencé pour transférer un carburant liquide, à l'aide d'une pompe à carburant (18), d'un réservoir de stockage dans un réservoir à remplir et pour acheminer le mélange gazeux, qui est présent au-dessus du carburant dans le réservoir à remplir, dans le réservoir de stockage, à l'aide d'une pompe à gaz (32), **caractérisé par le fait que** sur le chemin vers le réservoir de stockage, le débit du mélange gazeux est mesuré avec le procédé selon une des revendications 1 à5.

9. Procédé selon la revendication 8, **caractérisé par le fait que** la deuxième sonde de température (50) est disposée à proximité du réservoir à remplir, mais à l'extérieur de celui-ci.

10. Procédé selon la revendication 8 ou 9, **caractérisé par le fait que** le taux de refoulement de la pompe à gaz (32) est régulé en fonction du taux de refoulement de la pompe à carburant (18), par le biais du débit du mélange gazeux déterminé conformément au procédé selon une des revendications 1 à 5.

11. Procédé selon une des revendications 8 à 10, **caractérisé par le fait que** la commande (24, 56) de la pompe à gaz (32) est ajustée de façon intermittente en fonction du taux de refoulement de la pompe à carburant, par le biais du débit du mélange gazeux déterminé conformément au procédé selon une des revendications 1 à5.

12. Procédé selon la revendication 11, **caractérisé par le fait que** la commande (24, 56) de la pompe à gaz (32) est ajustée après chaque opération de ravitaillement, en fonction du débit du mélange gazeux déterminé à l'état stationnaire pendant cette opération de ravitaillement.

13. Procédé selon une des revendications 8 à 12, **caractérisé par le fait que** le liquide qui est entraîné par le mélange gazeux en direction du réservoir de stockage est détecté par le capteur d'écoulement (1) en tant que puissance de refroidissement induite supplémentaire.

14. Procédé selon une des revendications 8 à 13, **caractérisé par le fait qu'**un signal d'erreur est émis lorsque survient une valeur du débit du mélange gazeux qui s'écarte de plus d'une grandeur d'erreur prédéterminée d'une valeur de consigne préétablie par le taux de refoulement de la pompe à carburant (18).

15. Procédé selon une des revendications 8 à 14, **caractérisé par le fait que** le système de ravitaillement est associé à une station-service (10) et, suivant la saison, la courbe de pression de vapeur connue est une courbe de carburant d'été ou de carburant d'hiver.
